(19) Europäisches Patentamt
European Patent Office
Office européen des brevets

(11) **EP 4 434 892 A1**

(12) **EUROPEAN PATENT APPLICATION**

(43) Date of publication:
**25.09.2024 Bulletin 2024/39**

(21) Application number: **24164613.2**

(22) Date of filing: **19.03.2024**

(51) International Patent Classification (IPC):
***B64D 25/10*** *(2006.01)*

(52) Cooperative Patent Classification (CPC):
**B64D 25/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2023 US 202318186540
07.09.2023 US 202318463103**

(71) Applicant: **Rockwell Collins, Inc.
Cedar Rapids, IA 52498 (US)**

(72) Inventors:
- **CARSON, Kassidy L.
  Colorado Springs, CO (US)**
- **OTTOW, Nathan
  Colorado Springs, CO, 80923 (US)**

(74) Representative: **Dehns
St. Bride's House
10 Salisbury Square
London EC4Y 8JD (GB)**

(54) **DUAL STRIKER TIMING BASED MASS SCALAR DETERMINATION**

(57)     A method is disclosed herein. The method includes determining, by a processor, a first time value in response to a switch (506) being actuated a first time by a first striker (508), determining, by the processor, a second time value in response to the switch (506) being actuated a second time by a second striker (510), the second striker (510) disposed a first distance from the first striker (508) and the second time value being after the first time value, calculating, by the processor, a change in time between the first time value and the second time value, and adjusting, by the processor, a timing sequence based on the change in time.

FIG. 5A

EP 4 434 892 A1

**Description**

CROSS-REFERENCE TO RELATED APPLICATIONS

This application is a continuation in part of U.S. Patent Application No. 18/186,540, entitled "Acceleration Based Mass Scalar Determination", filed March 20, 2023.

FIELD

The present disclosure generally relates to ejection seats, and more particularly, to controlling ejection seat systems.

BACKGROUND

Current ejection seats utilize a high energy catapult assembly (sometimes referred to as a rocket-catapult assembly) to expel the ejection seat from an aircraft. The high energy catapult assembly is an energetic device that includes a catapult stage and a rocket stage. The catapult stage fires first, ejecting the ejection seat and any occupant of the ejection seat from the aircraft cockpit. The rocket stage then ignites and propels the ejection seat and its occupant to a separation distance from the aircraft and terrain associated with safe parachute recovery.

SUMMARY

Disclosed herein is a method including receiving, by a processor, a first acceleration data from an accelerometer, calculating, by the processor, a change in velocity based on the first acceleration data, the change in velocity being calculated over a first period of time, and adjusting, by the processor, a timing sequence based on the change in velocity.
In various embodiments, the method further includes determining, by the processor, that a switch has been actuated before adjusting the timing sequence. In various embodiments, the method further includes retrieving, by the processor, a nominal change in velocity, determining, by the processor, a scalar value as a ratio of the change in velocity to the nominal change in velocity, and adjusting, by the processor, the timing sequence based on the scalar value. In various embodiments, the first acceleration data includes time data.
In various embodiments, the method further includes receiving, by the processor, a second acceleration data from the accelerometer in response to a switch not being actuated, storing, by the processor, the second acceleration data, and calculating, by the processor, the change in velocity based on the first acceleration data and the second acceleration data. In various embodiments, the timing sequence is an ejection sequence of an ejection seat in an aircraft. In various embodiments, the method further includes receiving, by the processor, a command from an ejection seat before receiving the first acceleration data.
Also disclosed herein is a system including an ejection seat, an accelerometer coupled to the ejection seat, a switch coupled to the ejection seat, a processor, and a memory operatively coupled to the processor. The memory includes instructions stored thereon that, when executed by the processor, cause the processor to store a first acceleration data received from the accelerometer, calculate a change in velocity based at least in part on the first acceleration data, the change in velocity being calculated over a first time period, determine a scalar value based at least in part on the change in velocity in response to a signal from the switch, and adjust an ejection sequence of the ejection seat based on the scalar value.
In various embodiments, the instructions, when executed by the processor, further cause the processor to retrieve a nominal change in velocity and determine the scalar value as a ratio of the change in velocity to the nominal change in velocity. In various embodiments, the instructions, when executed by the processor, further cause the processor to determine the scalar value after calculating the change in velocity and before receiving the signal from the switch. In various embodiments, the instructions, when executed by the processor, further cause the processor to store a second acceleration data received from the accelerometer in response to a lack of signal from the switch, the second acceleration data between a second time period after the first acceleration data and calculate the change in velocity based on the first acceleration data and the second acceleration data.
In various embodiments, the second time period is about 2 ms to about 10 ms. In various embodiments, the instructions, when executed by the processor, further cause the processor to determine that the scalar value does not exceed a predetermined upper threshold and determine that the scalar value is not below a predetermined lower threshold. In various embodiments, the accelerometer includes a first accelerometer and a second accelerometer, wherein the first acceleration data is from the first accelerometer, and wherein the instructions, when executed by the processor, further cause the processor to receive a second acceleration data from the second accelerometer, compare the first acceleration data to the second acceleration data, and calculate the change in velocity in response to the first acceleration data and the second acceleration data being equivalent.

Also disclosed herein is an ejection seat. The ejection seat includes an accelerometer connected to the ejection seat and a controller configured to receive acceleration data from the accelerometer each first period of time, store the acceleration data, calculate an average velocity based on the acceleration data, determine a scalar value based on the average velocity, and adjust an ejection sequence based on the scalar value.

In various embodiments, the first period of time is about 0.5 ms to about 20 ms. In various embodiments, the controller is further configured to determine the scalar value as a ratio of the average velocity to a predefined average velocity. In various embodiments, the ejection sequence includes a first timing of deployment of a drogue parachute, a second timing of deployment of a main parachute, and a third timing of a separation of an occupant from the ejection seat.

In various embodiments, the ejection seat further includes a switch coupled to the ejection seat, wherein the controller is further configured to receive a signal from the switch before determining the scalar value, the signal indicating to the controller to determine the scalar value based on the change in velocity. In various embodiments, the average velocity is calculated over a second period of time that is about 30 ms to about 50 ms.

The foregoing features and elements may be combined in any combination, without exclusivity, unless expressly indicated herein otherwise. These features and elements as well as the operation of the disclosed embodiments will become more apparent in light of the following description and accompanying drawings.

BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.

FIG. 1 illustrates an ejection seat being expelled from an aircraft, in accordance with various embodiments.
FIGS. 2A and 2B illustrate an ejection system, in accordance with various embodiments.
FIGS. 3A, 3B, and 3C illustrate various stages of an ejection system, in accordance with various embodiments.
FIG. 4 illustrates a flow diagram of a method for controlling an ejection sequence, in accordance with various embodiments.
FIGS. 5A, 5B, and 5C illustrate various stages of an ejection system, in accordance with various embodiments.
FIG. 6 illustrates a flow diagram of a method for determining modifications for an ejection sequence, in accordance with various embodiments.

DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Ejection seat systems utilize a high energy catapult system, a rocket stage, and parachutes to safely eject aircrew from an aircraft. The deployment of each system is precisely timed to ensure that the aircrew clears the aircraft prior to deploying the parachute. However, the size (e.g., mass) of aircrew and their gear varies depending on the flight profile. Smaller aircrew have less mass and therefore have higher accelerations from the catapult system, rocket stage, and parachute drag loads. This higher acceleration may result in higher head, neck, and body loading leading to injuries for smaller aircrew. Larger aircrew have more mass and therefore lower accelerations from the catapult system, rocket stage, and parachute drag loads. This lower acceleration may result in a lower clearance of the aircraft and/or terrain during an ejection event.

Disclosed herein are systems and methods for optimizing ejection event sequencing to reduce aircrew injury and ensure clearance during an ejection event when the size (e.g., mass) of aircrew is unknown beforehand. In various embodiments, the system includes an ejection seat, a propulsion system, an accelerometer, and a controller. In various embodiments, the controller records acceleration information of the ejection seat and aircrew during an ejection event. In various embodiments, the controller calculates a change in velocity of the ejection seat during a first stage of the ejection event to determine a size of the aircrew in the ejection seat. In various embodiments, the controller calculates an average acceleration of the ejection seat over a time period to determine the size of the aircrew in the ejection seat. In various embodiments, the size of the aircrew may be categorized as small, medium, or large. In various embodiments, the controller determines a scalar modifier based on the size of the aircrew. In various embodiments, the scalar modifier is used to adjust timing of an ejection sequence (e.g., timing of ejection events) to improve the safety of the aircrew. In various embodiments, for the purpose of computational efficiency, reduced complexity, or improved reliability and safety, the controller may omit (e.g., be pre-programmed to bypass) calculation of intermediary values (e.g.; size of the aircrew, mass scalar, or the like) and perform direct adjustment of performance (e.g., mode boundary transition region, timing of ejection events, or the like) based on direct correlation or ratios of calculated root values (e.g., velocity, acceleration, time, or the like) to pre-characterized constants (e.g., nominal velocity, nominal acceleration, nominal time, or the like).

In various embodiments, the system includes a switch, a first striker, and a second striker with the second striker being spaced a predetermined distance from the first striker. In various embodiments, the system determines the scalar modifier based on an elapsed time between the switch engaging the first striker and the second striker. In various embodiments, the system may be installed on different platforms and/or aircraft with little to no change in the code.

The systems and methods disclose herein improve aircrew safety by tailoring the ejection sequence to the size of the aircrew. In various embodiments, delaying the parachute longer allows lighter aircrew to decelerate further prior to deployment and parachute opening loads are reduced. Therefore, the injury risk is reduced for small aircrew. In various embodiments, delaying drogue deployment allows the drogue to be deployed after the seat is above the aircraft tail or other structure for larger aircrew. In various embodiments, speeding up parachute deployment for larger occupants improves terrain clearance. In various embodiments, other performance parameters can be scaled including, but not limited to, the target velocity and/or altitude of a mode boundary or the time delay of a given ejection event. It will be appreciated by one of skill in the art that the systems and methods disclosed herein are not limited to ejection systems and can be applied to other controlled thrust and/or dynamic payload applications for system performance tailoring.

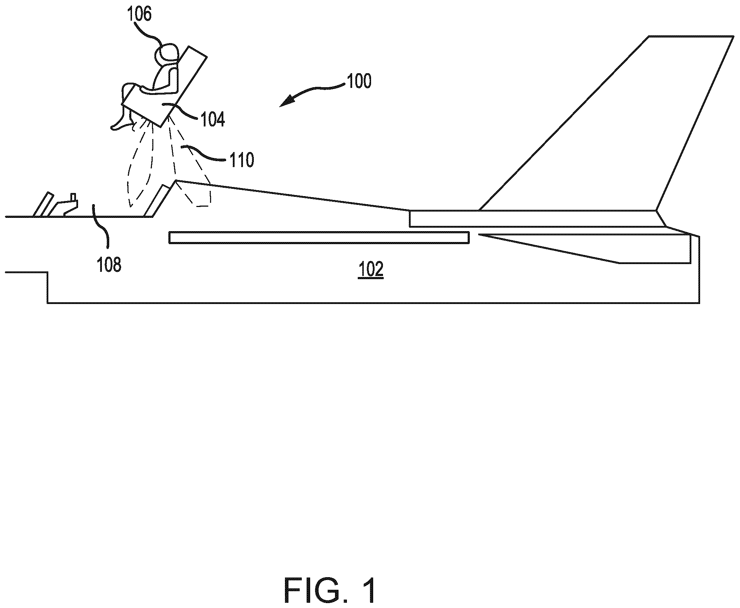

Referring now to FIG. 1, an aircraft ejection system 100 is illustrated, in accordance with various embodiments. Aircraft ejection system 100 includes an aircraft 102 and an ejection seat 104. Ejection seat 104 may be installed in aircraft 102 and be configured to expel an occupant 106 (e.g., aircrew) from a cockpit 108. Ejection seat 104 may be propelled from aircraft 102, and more specifically, from cockpit 108 by a propellant 110. Propellant 110 may be configured to propel the combined mass of ejection seat 104 and occupant 106.

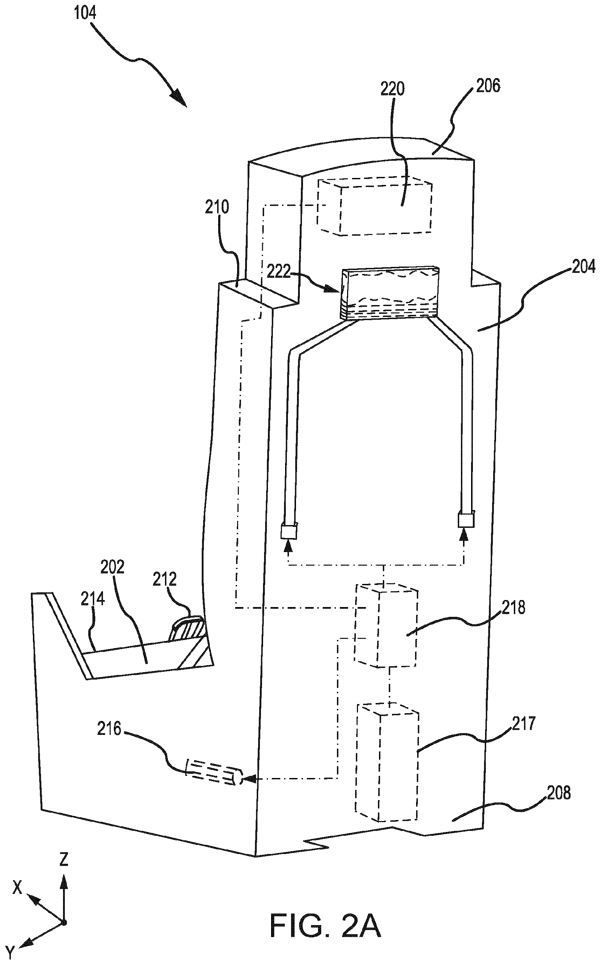

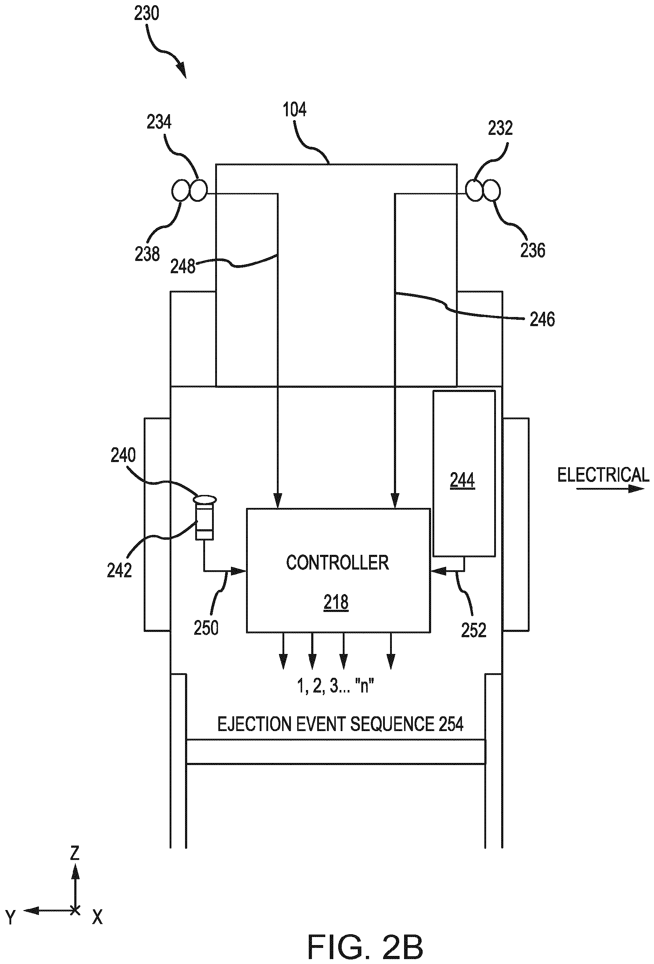

Referring now to FIGS. 2A and 2B, components of ejection seat 104 are illustrated, in accordance with various embodiments. Ejection seat 104 includes a seat pan 202, a seatback 204, a headrest 206, an ejection handle 212, a harness release system 216, a catapult system 217, a controller 218, a main parachute 220, and, in various embodiments, a drogue parachute 222. Seat pan 202 may be located at a lower end 208 of seatback 204 and headrest 206 may be located at an upper end 210 of seatback 204. Ejection seat 104 is configured to restrain and secure occupant 106 while in aircraft 102 and during an ejection event.

Ejection seat 104 further includes an ejection handle 212 that, in various embodiments, may be located proximate a front side 214 of seat pan 202 (e.g., the positive x-direction). Front side 214 is opposite seatback 204. In various embodiments, ejection handle 212 may be located at a right side of seat pan 202 (e.g., the negative y-direction) and/or the left side of seat pan 202 (e.g., the positive y-direction). In various embodiments, ejection handle 212 may be centered between the right side and left side and configured to be between the legs of occupant 106. In various embodiments, ejection handle 212 may include more than one ejection handle. It should be understood that ejection handle 212 may be located in any position that is accessible to occupant 106 of ejection seat 104. Ejection handle 212 may be configured to initiate an ejection sequence upon actuation. For example, occupant 106 pulling ejection handle 212 may cause ejection seat 104 to be expelled from aircraft 102.

Harness release system 216 secures ejection seat 104 to occupant 106. Harness release system 216 is connected to controller 218 and may receive signals from controller 218 controlling the activation of harness release system 216. Harness release system 216 disengages in response to a signal from controller 218, allowing ejection seat 104 to be separated from occupant 106 after ejection from aircraft 102.

Catapult system 217 may secure ejection seat 104 to aircraft 102. Catapult system 217 may be connected to the power supply of controller 218 and may provide signals to power supply of controller 218 initiating activation of power supply of controller 218. Catapult system 217 is initiated by the aircraft 102 in response to a signal from ejection seat 104 in response to ejection handle 212 being actuated by occupant 106, allowing ejection seat 104 to be separated from aircraft 102. In various embodiments, catapult system 217 may further include propellent (e.g., propellant 110) for propelling ejection seat 104 away from aircraft 102. In various embodiments, catapult system 217 may further include separate propellant for propelling the ejection seat 104 up the rails of aircraft 102 and additional propellant (e.g., rocket propellant) for propelling the ejection seat 104 beyond aircraft 102 and away from structures and/or terrain.

Main parachute 220 may be located near upper end 210 of seatback 204. Main parachute 220 may be deployed after ejection seat 104, including occupant 106, have cleared aircraft 102. Main parachute 220 is connected to controller 218 and may receive signals from controller 218 controlling the deployment of main parachute 220.

Drogue parachute 222 may be located near upper end 210 of seatback 204. In various embodiments, drogue parachute 222 may be located in other regions of seatback 204. Drogue parachute 222 may be deployed prior to deploying main parachute 220 in order to decelerate ejection seat 104 to a safe speed for deploying main parachute 220. Drogue parachute 222 is connected to controller 218 and may receive signals from controller 218 controlling the deployment of drogue parachute 222.

Controller 218 controls the timing sequence of an ejection event in response to ejection handle 212 being actuated. The timing sequences that are managed by controller 218 may be different for each aircraft (e.g., aircraft 102). In various embodiments, the timing sequences are predetermined sequences for each aircraft. In various embodiments, controller 218 may receive input from one or more sensors in order to modify the timing sequences to the current conditions of ejection seat 104. The one or more sensors may include a temperature sensor, a pressure sensor, an air speed sensor, an altimeter, an accelerometer, and/or a gyroscope. Based on inputs from one or more of the sensors, controller 218 will control the deployment of harness release system 216, main parachute 220, and drogue parachute 222.

Referring now to FIG. 2B, a diagram 230 of ejection seat 104 is illustrated, in accordance with various embodiments. Diagram 230 includes controller 218 that may be connected to a first pressure sensor 232, a second pressure sensor 234, a first temperature sensor 236, a second temperature sensor 238, a third pressure sensor 240, a third temperature sensor 242, and an accelerometer 244. Controller 218 may be connected to first pressure sensor 232 and first temperature sensor 236 by a first connection 246 (e.g., wire, cable, etc.). Controller 218 may be connected to second pressure sensor 234 and second temperature sensor 238 by a second connection 248. Controller 218 may be connected to third pressure sensor 240 and third temperature sensor 242 by a third connection 250. Controller 218 may be connected to accelerometer 244 by a fourth connection 252. In various embodiments, accelerometer 244 may include more than one accelerometer 244 each of which may be in different positions on ejection seat 104. In various embodiments, the sensors (e.g., accelerometer 244, first pressure sensor 232, first temperature sensor 236, etc.) may be integral to controller 218. It should be understood that the number, location, and signal output (e.g., electrical, pneumatic, etc.) of sensors illustrated and described with respect to FIG. 2B is for illustration and discussion purposes only. Accordingly, there may be more or fewer sensors and/or the sensors may be at different positions with respect to ejection seat 104.

Controller 218 receives inputs from one or more of the sensors and outputs an ejection sequence 254 that may be optimized for the current conditions of ejection seat 104. In various embodiments, controller 218 may be programmed with one or more predefined ejection sequences (e.g., ejection sequence 254). In various embodiments, controller 218 may calculate a modified ejection sequence based on the predefined ejection sequence and input from one or more of the sensors. The inputs from the one or more sensors may provide additional information with respect to the state of ejection seat 104 or the environment surrounding ejection seat 104. Controller 218 may use this additional information to improve the safety for each occupant 106 of ejection seat 104.

Controller 218 may receive input from one or more of accelerometers 244 during an ejection sequence (e.g., after ejection handle 212 is actuated). In various embodiments, accelerometer 244 may be calibrated before installation to ensure proper data. Accelerometer 244 may provide acceleration data in three dimensions (e.g., along the x-axis, the y-axis, and the z-axis). In various embodiments, accelerometer may provide an acceleration and a direction to controller 218. In various embodiments, controller 218 may calculate an acceleration and a direction based on raw data received from accelerometer 244. In various embodiments, controller 218 may receive data from accelerometer 244 at regular time intervals. Each time interval may be about 0.5 ms to about 20 ms, and more specifically, about 1 ms to about 4 ms. In various embodiments, controller 218 may receive data from accelerometer 244 after ejection handle 212 has been actuated.

Controller 218 uses data from accelerometer 244 to determine an approximate size of occupant 106 and adjust ejection sequence 254 accordingly. For example, controller 218 may classify occupant 106 as small, medium, or large based on data from accelerometer 244 after ejection handle 212 is actuated. In various embodiments, controller 218 may classify occupant 106 as small or large. In various embodiments, controller 218 may have more than three classifications for the size of occupant 106. In various embodiments, controller 218 may not assign classification to the size of occupant 106, but rather may indirectly calculate a change in velocity and assign a scalar which is useful for modification of the ejection sequence relative to the occupant size. Controller 218 determines a mass scalar based on the size of occupant 106 and uses the determined mass scalar to modify ejection sequence 254. In various embodiments, the mass scalar may be about 0.5 to about 1.5, and more specifically, about 0.7 to about 1.3. The occupant size classifications are based on mass of the occupant along with any accompanying safety gear. In various embodiments, a small occupant may have a mass of less than about 150 lbs. (about 68 kilograms), a medium occupant may have a weight between about 150 lbs. (about 68 kilograms) and about 215 lbs. (about 97.5 kilograms), and a large occupant may have a weight of greater than about 215 lbs. (about 97.5 kilograms). In various embodiments, other ranges of mass may be used to identify the different size categories (e.g., small, medium, large). In various embodiments, ranges of change in velocity may be used to identify the different size categories (e.g., high, nominal, low) relative to a nominal or typical value.

Controller 218 may comprise one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. Controller 218 may further comprise memory to store data, executable instructions, system program instructions, and/or controller instructions to implement the control logic of controller 218.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

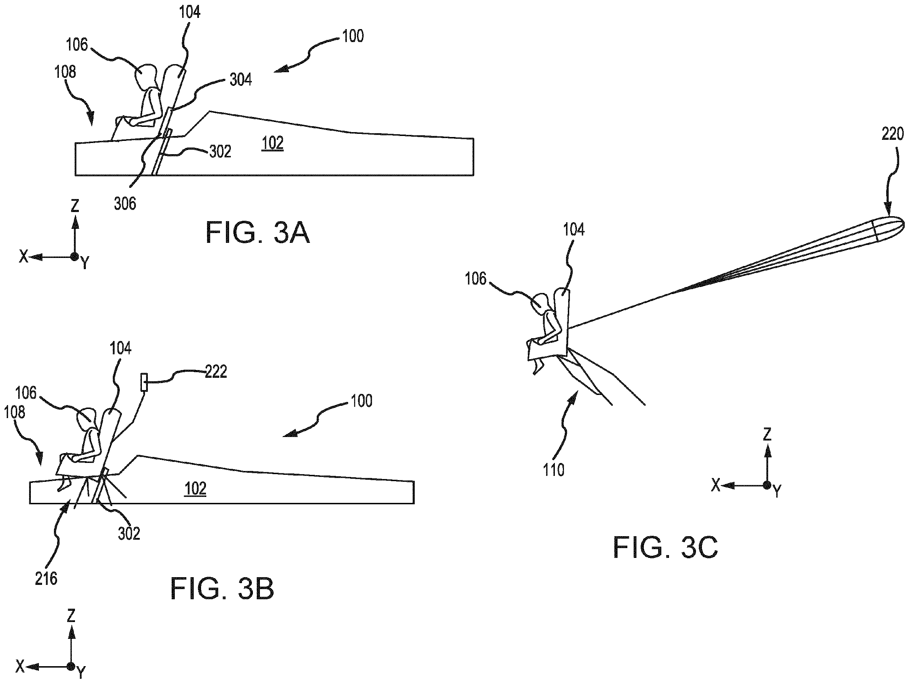

Referring now to FIGS. 3A-3C, stages of aircraft ejection system 100 are shown, in accordance with various embodiments. FIG. 3A illustrates a first stage of ejection system 100, including activation of a catapult propulsion system (e.g., catapult 217) following an initial release of a canopy or other cockpit enclosure. FIG. 3B illustrates a second stage of ejection system 100, during the catapult phase, following switch 306 activation, where drogue parachute 222 has been deployed. FIG. 3C illustrates a third stage of ejection system 100, including activation of a sustained propulsion system. Each stage of ejection system 100 may be initiated by controller 218 according to ejection sequence 254 to ensure proper execution of the ejection sequence, or, in various embodiments, may be otherwise activated by aircraft 102 prior to controller 218 powering on. Aircraft ejection system 100 further includes cockpit rails 302, seat rollers/sliders 304, and a switch 306. During an ejection event, ejection seat 104 slides upward (e.g., in the positive z-direction) along cockpit rails 302 and seat rollers/sliders 304 which direct ejection seat 104 safely out of cockpit 108. Drogue parachute 222 and/or main parachute 220 may be deployed prior to, after, or during ejection seat 104 exit from cockpit 108. Switch 306 provides a signal indicating that ejection seat is leaving cockpit 108.

Referring first to FIG. 3A, the first stage of ejection sequence is illustrated. The first stage of ejection sequence begins when controller 218 powers on (e.g., time $t_1$) and ends when switch 306 is actuated (e.g., time $t_0$). Controller 218 is connected to switch 306 and receives a signal when actuated. In various embodiments, switch 306 may include multiple switches for redundancy. Controller 218 begins recording acceleration data from accelerometer at regular time intervals beginning at time $t_1$. In various embodiments, and for ease of discussion, the regular time interval may be about 1ms to about 4 ms. As noted above, any time interval may be used and the time interval may vary for each aircraft (e.g., aircraft 102).

The change in velocity ($\Delta v$) correlates to catapult thrust $T(t)$ (e.g., propellant thrust), ejected mass $m(t)$ (e.g., the combined mass of ejection seat 104 and occupant 106), and acceleration $a(t)$. During the first stage of the ejection sequence, controller 218 may continuously calculate a change in velocity of ejection seat 104 and occupant 106 based on the received acceleration data. In various embodiments, the continuous calculation may be made over a predefined period of time. In various embodiments, the calculation time period is about 20 ms to about 100 ms, and more specifically about 40 ms to about 60 ms. In various embodiments, the calculation time period may be about 44 ms. For ease of discussion below, the time period of 44 ms will be used.

The change in velocity may be determined by integrating the acceleration data received from accelerometer 244 over the calculation time period. This calculation may be performed at each regular time interval (e.g., 4 ms). In practice, controller 218 performs a piecewise summation of the accelerometer readings to determine an approximate change in velocity. The equations used to determine the change in velocity in various embodiments are reproduced below:

$$\Delta v = \int_{t_1}^{t_0} \frac{|T(t)|}{m(t)} \, dt = \int_{t_1}^{t_0} a(t) dt = \lim_{\Delta t \to 0} \sum_{i=t_1}^{t_0} a(i)\Delta t$$

Controller 218 maintains a current calculated change in velocity. That is, controller 218 performs the computations described each time that controller 218 receives acceleration data. This allows controller 218 to use the calculated change in velocity as soon as switch 306 is actuated. First stage ends when switch 306 is actuated (e.g., time $t_0$) at which time controller 218 has calculated the change in velocity from time $t_0$ backward over the calculation time period (e.g., 44ms).

Referring next to FIG. 3B, the second stage of ejection sequence is illustrated. The second stage of ejection sequence begins when switch 306 is actuated (e.g., time $t_0$) and ends when controller 218 has determined an updated ejection sequence (e.g., ejection sequence 254) based on the change in velocity. Controller 218 retrieves the calculated change in velocity and may determine an approximate size of occupant 106 (e.g., small, medium, or large) based on the change in velocity. Controller 218 may then calculate a unitless mass scalar based on the change in velocity.

The mass scalar ($S_m$) is calculated as a ratio of the calculated change in velocity ($\Delta v$) to a nominal, predefined change in velocity ($\Delta v_n$), as shown in the equation below:

$$S_m = \frac{\Delta v}{\Delta v_n}$$

The nominal change in velocity ($\Delta v_n$) may be based on calibration data for the given system (e.g., aircraft ejection system 100 including ejection seat 104 and aircraft 102) using an average, or mean, ejection mass (e.g., ejection seat 104 and occupant 106). In various embodiments, the nominal change in velocity ($\Delta v_n$) may be calibrated to account for other factors such as catapult tolerances, temperatures, airspeed, etc.

The mass scalar ($S_m$) may then be applied to proportionally scale ejection sequence timing throughout the ejection event. In various embodiments, failsafe thresholds, such as an upper threshold and a lower threshold, may be identified for safety of occupant 106. The baseline ejection sequence (e.g., ejection sequence 254) is used when $S_m$ = 1. In various embodiments, $S_m$ = 1 indicates a medium sized occupant 106. In various embodiments, the failsafe value may be $S_m$ = 1 in the event that $S_m$ is greater than the upper threshold or less than the lower threshold. In various embodiments, the upper threshold may be about 1.3 to about 1.5. In various embodiments, the lower threshold may be about 0.5 to about 0.7. In various embodiments, the range of $S_m$ may be $0.7 < |S_m| < 1.3$.

A mass scalar value of $S_m > 1$, may indicate a small occupant 106. That is, the change in velocity is greater than the nominal change in velocity ($\Delta v > \Delta v_n$) indicating a larger acceleration caused by a lighter payload. Controller 218 may modify the ejection sequence accordingly for the small occupant 106. A mass scalar value of $S_m < 1$, may indicate a large occupant 106. That is, the change in velocity is less than the nominal change in velocity ($\Delta v < \Delta v_n$) indicating a smaller acceleration caused by a heavier payload. Controller 218 may modify the ejection sequence accordingly for the large occupant 106. Controller 218 may adjust the ejection sequence by using $S_m$ as a divisor, as a multiplier, as a non-linear scalar, or as a quadratic scalar, among others.

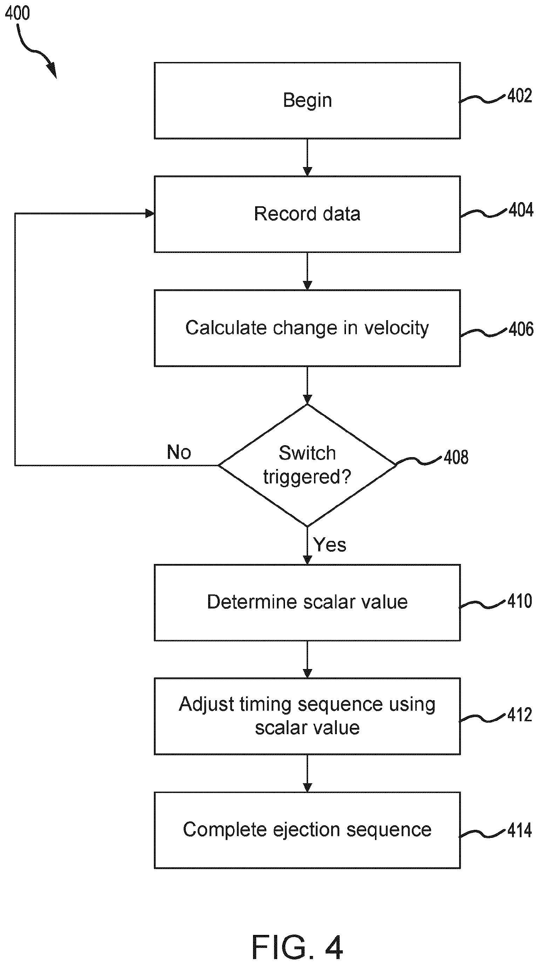

Referring now to FIG. 4, a method 400 for determining modifications for an ejection sequence is illustrated, in accordance with various embodiments. In various embodiments, method 400 may be performed by controller 218 as described above with respect to FIGS. 2A, 2B, and 3A-3C. In various embodiments, controller 218 may be coupled to accelerometer 244 as described above with respect to FIG. 2B. In various embodiments, accelerometer 244 may include multiple accelerometers for redundancy.

At block 402, controller 218 begins an ejection sequence in response to an event. In various embodiments, the event may be the actuation of an ejection handle (e.g., ejection handle 212). In various embodiments, the event may be the power on of controller 218. In various embodiments, the event may be whichever is first between the actuation of the ejection handle and the power on of controller 218.

At block 404, controller 218 records acceleration data received from accelerometer 244. In various embodiments, controller 218 may wait a predefined time period to receive and record the acceleration data. In various embodiments, the predetermined time period may be about 0.5 ms to about 20 ms, and more specifically, about 2 ms to about 10 ms.

At block 406, controller 218 calculates a change in velocity based on the recorded acceleration data. In various embodiments, controller 218 performs a piecewise summation of the product of recorded acceleration data times the recording timestep over a calculation time period. In various embodiments, the calculation time period may be about 20 ms to about 100 ms, and more specifically, about 30 ms to about 50 ms. In various embodiments, controller 218 may in addition or in the alternative calculate an average velocity based on the recorded acceleration data.

At decision block 408, controller 218 determines whether a switch (e.g., switch 306) has been triggered. If it is determined that the switch was not triggered, then method 400 returns to block 404 to record acceleration data. If, instead, it is determined that the switch was triggered method 400 proceeds to block 410.

At block 410, controller 218 determines a mass scalar. In various embodiments, the mass scalar may be applied to an ejection sequence (e.g., ejection sequence 254) to modify the ejection sequence for different sized occupants (e.g., occupant 106). In various embodiments, the mass scalar may be determined as the ratio of the calculated change in velocity from block 406 to a nominal change in velocity. In addition or in the alternative, the mass scalar may be determined as the ratio of the calculated average velocity from block 406 to a nominal average velocity. In various embodiments, controller 218 may determine the mass scalar at block 406 after determining the change in velocity. In such embodiments, controller 218 retrieves the mass scalar that was previously calculated in response to the switch being triggered.

At block 412, controller 218 adjusts a timing sequence based on the determined scalar value. In various embodiments, the timing sequence may be an ejection sequence (e.g., ejection sequence 254). In various embodiments, the scalar may be used as a divisor, a multiplier, a non-linear scalar, or a quadratic scalar, among others, to adjust the timing sequence.

At block 414, controller 218 implements the modified timing sequence. In various embodiments, this includes deploying a drogue parachute, deploy a main parachute, and separating the occupant (e.g., occupant 106) from the ejection seat (e.g., ejection seat 104), among others, at the modified times as determined using the determined scalar value.

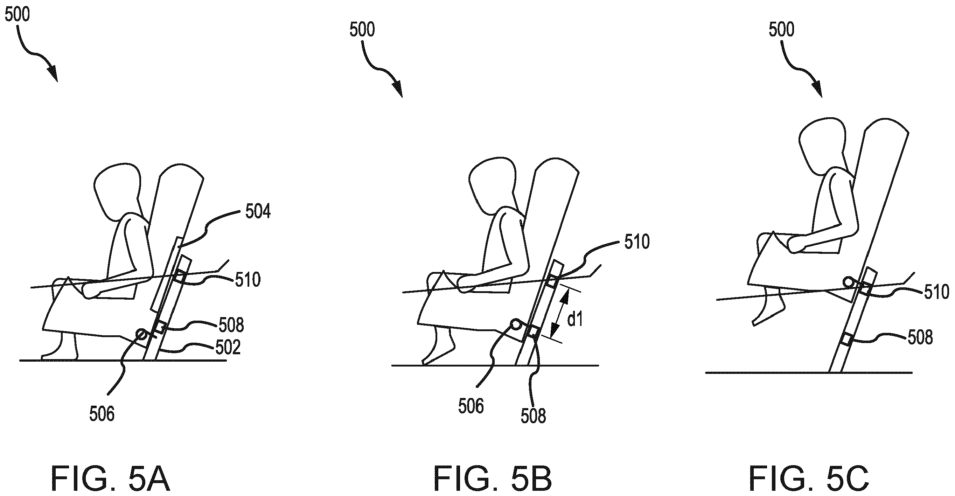

Referring now to FIGS. 5A-5C, a time based ejection performance modulation system, system 500, is illustrated, in accordance with various embodiments. In various embodiments, system 500 may be an example of aircraft ejection system 100 described above with respect to FIG. 1. System 500 includes similar components to those described above for ejection system 100 described in FIGS. 1 and 3A-3C, including ejection seat 104, controller 218 (as described in FIGS. 2A and 2B), cockpit rails 502, seat rollers/sliders 504, and switch 506. System 500 further includes a first striker 508 and a second striker 510. First striker 508 and second striker 510 are placed a distance d1 apart from each other. In various embodiments, distance d1 may be about 6 inches to about 24 inches, and more specifically about 12 inches to about 18 inches. First striker 508 and second striker 510 may be installed in any airframe at distance d1 from each other, in various embodiments, without changing any software in controller 218.

FIG. 5A illustrates a first stage of system 500, including activation of a catapult propulsion system (e.g., catapult 217) following an initial release of a canopy or other cockpit enclosure. FIG. 5B illustrates a second stage of system 500, during the catapult phase, when switch 506 is activated by first striker 508. FIG. 5C illustrates a third stage of ejection system 500, when switch 506 is activated by second striker 510. System 500 includes a fourth stage (similar to that describe above in FIG. 3C) that includes activation of a sustained propulsion system upon separation from the aircraft. Each stage of system 500 may be initiated by controller 218 according to ejection sequence 254 to ensure proper execution of the ejection sequence, or, in various embodiments, may be otherwise activated by aircraft 102 prior to controller 218 powering on. During an ejection event, ejection seat 104 slides upward (e.g., in the positive z-direction) along cockpit rails 502 and seat rollers/sliders 504 which direct ejection seat 104 safely out cockpit 108.

Referring to FIG. 5A, the first stage of an ejection sequence of system 500 is illustrated. The first stage of the ejection sequence begins when controller 218 powers on, initiating the ejection, and ends when switch 506 is activated by first striker 508 (e.g., time *t1*). Controller 218 is connected to switch 506 and receives a signal in response to switch 506 being actuated. In various embodiments, switch 506 may include multiple switches for redundancy. In various embodiments, controller 218 may record the time at time *t1*. In various embodiments, controller 218 may start a timer at time *t1*. In various embodiments, controller 218 may record time *t1* and start a timer.

Referring to FIGS. 5B and 5C, the second stage of the ejection sequence of system 500 is illustrated. The second stage of the ejection sequence begins when switch 506 is actuated by first striker 508 (e.g., time *t1*) and ends when switch 506 is actuated by second striker 510 (e.g., time *t0*). In various embodiments, controller 218 may record time *t0* and/or stop the timer and record the elapsed time between time *t1* and time *t0*. Controller 218 may use time *t1* and time *t0* to determine a $\Delta t$ between *t1* and *t0*. Controller 218 may compare the determined $\Delta t$ against the timer for verification. Accordingly, the time period $\Delta t$ between a fixed displacement, distance d1, correlates to an average velocity

$$\Delta t = \frac{d1}{v} = |t_1 - t_0|$$

v such that . Therefore, controller 218 may include a counter routine to determine the elapsed time between switch 506 and closure events. Calculating a change in time across a known distance (e.g., distance d1) allows the same algorithm to be implemented in different aircraft (e.g., aircraft 102) and reduces the time and effort, or otherwise eliminates the need, to pre-calibrate the accelerometers in controller 218 prior to installation (as would be done if employing average velocity).

The change in time, $\Delta t$, may then be converted into a unitless mass scalar to modulate the performance parameters of system 500, similar to what is described above in FIGS. 3A-3C. The mass scalar ($S_m$) is calculated as a ratio of the calculated change in time ($\Delta t$) to a nominal, predefined change in velocity ($\Delta t_n$), as shown in the equation below:

$$S_m = \frac{\Delta t}{\Delta t_n}$$

The nominal change in time ($\Delta t_n$) may be based on calibration data for a given system (e.g., aircraft ejection system 100 including ejection seat 104 and aircraft 102) using an average, or mean, ejection mass (e.g., ejection seat 104 and occupant 106). The calibration data may then be used by any system (e.g., other aircraft ejection systems) based on first striker 508 and second striker 510 being installed at distance d1 from each other. In various embodiments, distance d1 may be varied between different aircraft implementations.

As previously described, the mass scalar ($S_m$) may then be applied to proportionally scale ejection sequence timing throughout the ejection event. In various embodiments, failsafe thresholds, such as an upper threshold and a lower threshold, may be identified for safety of occupant 106. The baseline ejection sequence (e.g., ejection sequence 254) is used when $S_m$ = 1. In various embodiments, $S_m$ = 1 indicates a medium sized occupant 106. In various embodiments, the failsafe value may be $S_m$ = 1 in the event that $S_m$ is greater than the upper threshold or less than the lower threshold. In various embodiments, the upper threshold may be about 1.3 to about 1.5. In various embodiments, the lower threshold may be about 0.5 to about 0.7. In various embodiments, the range of $S_m$ may be $0.7 < | S_m | < 1.3$.

A mass scalar value of $S_m < 1$, may indicate a small occupant 106. That is, the change in time is greater than the nominal change in time ($\Delta t > \Delta t_n$) indicating a larger acceleration caused by a lighter payload. Controller 218 may modify the ejection sequence accordingly for the small occupant 106. A mass scalar value of $S_m > 1$, may indicate a large occupant 106. That is, the change in time is less than the nominal change in time ($\Delta t < \Delta t_n$) indicating a smaller acceleration caused by a heavier payload. Controller 218 may modify the ejection sequence accordingly for the large occupant 106. Controller 218 may adjust the ejection sequence by using $S_m$ as a divisor, as a multiplier, as a non-linear scalar, or as a quadratic scalar, among others.

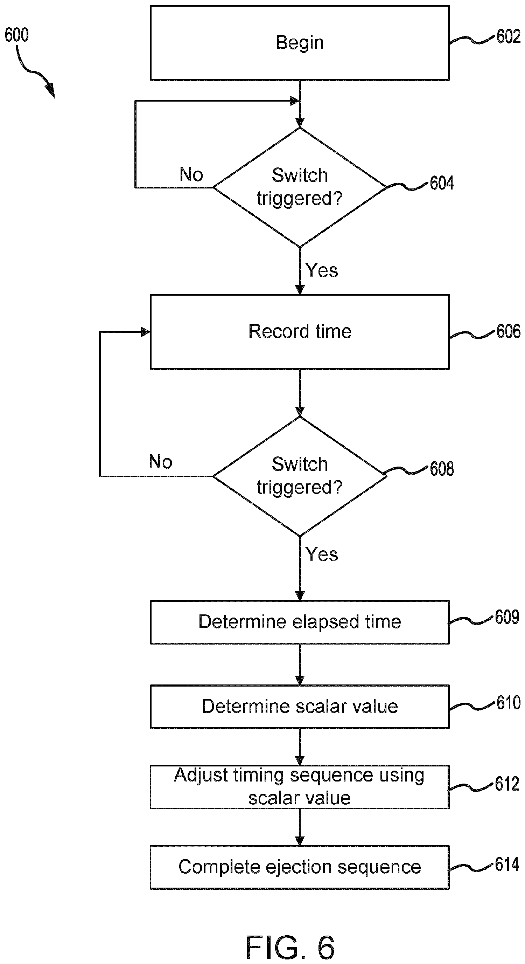

Referring now to FIG. 6, a method 600 for determining modifications for an ejection sequence is illustrated, in accordance with various embodiments. In various embodiments, method 600 may be performed by controller 218 as described above with respect to FIGS. 2A, 2B, and 5A-5C. In various embodiments, controller 218 may be coupled to a timer and a switch (e.g., switch 506) as described above with respect to FIG. 5A-5C.

At block 602, controller 218 begins an ejection sequence in response to an event. In various embodiments, the event may be the actuation of an ejection handle (e.g., ejection handle 212). In various embodiments, the event may be the power on of controller 218. In various embodiments, the event may be whichever is first between the actuation of the ejection handle and the power on of controller 218.

At decision block 604, controller 218 determines whether a switch (e.g., switch 506) has been triggered a first time (i.e., by first striker 508). If it is determined that the switch was not triggered, then method 600 returns to decision block 604 to wait for the switch to be triggered. If, instead, it is determined that the switch was triggered, method 600 proceeds to block 606.

At block 606, controller 218 calculates records a first time at which the switch was triggered. In various embodiments, controller 218 may additionally, or alternatively, begin a counter or a timer.

At decision block 608, controller 218 determines whether the switch (e.g., switch 506) has been triggered a second time (i.e., by second striker 510). If it is determined that the switch was not triggered, then method 600 returns to block 606 to wait for the switch to be triggered and record additional data. If, instead, it is determined that the switch was triggered, controller 218 records a second time at which the switch was triggered. In various embodiments, additionally, or alternatively, controller 218 may stop the counter or timer. Method 600 then proceeds to block 610.

At block 609, controller 218 determines an elapsed time between the switches being triggered. In various embodiments, controller 218 may use the value of the counter or timer. In various embodiments, controller 218 may determine the elapsed time based on the first time and the second time, such as by subtracting the first time from the second time to determine the elapsed time.

At block 610, controller 218 determines a mass scalar. In various embodiments, the mass scalar may be applied to an ejection sequence (e.g., ejection sequence 254) to modify the ejection sequence for different sized occupants (e.g., occupant 106). In various embodiments, the mass scalar may be determined as a ratio of a change in time (e.g., first time and second time, the counter, and/or the timer) over a known distance to a nominal change in time over the known distance.

At block 612, controller 218 adjusts a timing sequence based on the determined scalar value. In various embodiments, the timing sequence may be an ejection sequence (e.g., ejection sequence 254). In various embodiments, the scalar may be used as a divisor, a multiplier, a non-linear scalar, or a quadratic scalar, among others, to adjust the timing sequence.

At block 614, controller 218 implements the modified timing sequence. In various embodiments, this includes deploying a drogue parachute, deploy a main parachute, and separating the occupant (e.g., occupant 106) from the ejection seat (e.g., ejection seat 104), among others, at the modified times as determined using the determined scalar value.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

**Claims**

1.  A method comprising:

    determining, by a processor, a first time value in response to a switch being actuated a first time by a first striker;
    determining, by the processor, a second time value in response to the switch being actuated a second time by a second striker, the second striker disposed a first distance from the first striker and the second time value being after the first time value;
    calculating, by the processor, a change in time between the first time value and the second time value; and
    adjusting, by the processor, a timing sequence based on the change in time.

2.  The method of claim 1, wherein the timing sequence is an ejection timing sequence including deploying a parachute and separating from an ejection seat.

3.  The method of claim 1 or 2, wherein the switch is coupled to an ejection seat and the first striker and the second striker are coupled to a rail in an aircraft.

4.  The method of any preceding claim, further comprising:

    retrieving, by the processor, a nominal time value;
    determining, by the processor, a scalar value as a ratio of the change in time to the nominal time value; and
    adjusting, by the processor, the timing sequence based on the scalar value, and preferably wherein the nominal time value is a length of time for an ejection seat to travel the first distance.

5.  The method of any preceding claim, wherein the timing sequence is an ejection sequence of an ejection seat in an aircraft.

6. The method of any preceding claim, further comprising:
   receiving, by the processor, a command from an ejection seat before receiving the first time value.

7. A system, comprising:

   an ejection seat (104);
   a switch (506) coupled to the ejection seat (104);
   a rail coupled to the ejection seat (104);
   a first striker (508) coupled to the rail and configured to actuate the switch (506); and
   a second striker (510) coupled to the rail coupled to the rail a first distance from the first striker (508),
   a processor; and
   a memory operatively coupled to the processor, the memory comprising instructions stored thereon that, when executed by the processor, cause the processor to:

   store a first time value in response to the switch (506) being actuated a first time by the first striker (508);
   store a second time value in response to the switch (506) being actuated a second time by the second striker (510), the second time being after the first time;
   calculate a change in time based on the first time value and the second time value;
   determine a scalar value based at least in part on the change in time; and
   adjust an ejection sequence of the ejection seat (104) based on the scalar value.

8. The system of claim 7, wherein the instructions, when executed by the processor, further cause the processor to:

   retrieve a nominal change in time; and
   determine the scalar value as a ratio of the change in time to the nominal change in time, and preferably wherein the nominal change in time is calculated over the first distance, and preferably wherein the nominal change in time is a length of time for the ejection seat (104) to travel the first distance; and/or
   wherein the first time value is recorded in response to the first striker (508) actuating the switch (506) and the second time value is recorded in response to the second striker (510) actuating the switch (506).

9. The system of claim 7 or 8, wherein the instructions, when executed by the processor, further cause the processor to:

   determine that the scalar value does not exceed a predetermined upper threshold; and
   determine that the scalar value is not below a predetermined lower threshold.

10. The system of any of claims 7-9, wherein the instructions, when executed by the processor, further cause the processor to:

    start a counter in response to the switch (506) being actuated the first time;
    stop the counter in response to the switch (506) being actuated the second time; and
    determine the change in time is a value of the counter.

11. An ejection seat (104), comprising:

    a switch (506) connected to the ejection seat (104), wherein the ejection seat (104) is configured to move along a rail having a first striker (508) and a second striker (510);
    a controller configured to:

    receive a first time value in response to the switch (506) being actuated a first time by the first striker (508);
    receive a second time value in response to the switch (506) being actuated a second time by the second striker (510);
    calculate a change in time between the first time value and the second time value;
    determine a scalar value based on the change in time; and
    adjust an ejection sequence based on the scalar value.

12. The ejection seat (104) of claim 11, wherein the controller is further configured to:

start a timer in response to the switch (506) being actuated the first time;
stop the timer in response to the switch (506) being actuated the second time; and
calculate the change in time as a value of the timer, and preferably wherein the controller is further configured to:

compare the change in time to the value of the timer; and
determine the scalar value in response to the change in time being equal to the value of the timer.

13. The ejection seat (104) of claim 11 or 12, wherein the controller is further configured to:
determine the scalar value as a ratio of the change in time to a predefined nominal time value.

14. The ejection seat (104) of any of claims 11-13, wherein the ejection sequence includes a first timing of deployment of a drogue parachute, a second timing of deployment of a main parachute, and a third timing of a separation of an occupant from the ejection seat (104).

15. The ejection seat (104) of any of claims 11-14, wherein the switch (506) is actuated the first time in response to the first striker (508) and the switch (506) is actuated the second time in response to the second striker (510), the second striker (510) disposed a predefined distance from the first striker (508).

FIG. 1

FIG. 2A

230

234    104    232

238    236

248

246

240

244    ELECTRICAL →

242

CONTROLLER

218

250    252

1, 2, 3... "n"

EJECTION EVENT SEQUENCE 254

Z
Y ← X

FIG. 2B

FIG. 3A

FIG. 3B

FIG. 3C

400

Begin — 402

Record data — 404

Calculate change in velocity — 406

Switch triggered? — 408

No

Yes

Determine scalar value — 410

Adjust timing sequence using scalar value — 412

Complete ejection sequence — 414

FIG. 4

FIG. 5A

FIG. 5B

FIG. 5C

600

602 — Begin

604 — Switch triggered?
No
Yes

606 — Record time

608 — Switch triggered?
No
Yes

609 — Determine elapsed time

610 — Determine scalar value

612 — Adjust timing sequence using scalar value

614 — Complete ejection sequence

FIG. 6

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 241 197 B1 (HARLAND SYDNEY A [CA]) 5 June 2001 (2001-06-05) * column 3, lines 13-24 * * column 3, lines 58-60 * * column 4, line 45; figures * | 1 | INV. B64D25/10 |
| A | US 11 453 506 B2 (AMI IND INC [US]) 27 September 2022 (2022-09-27) * column 7, lines 7-19; figures * | 1-15 | |
| A | GB 2 602 698 A (AMI IND INC [US]) 13 July 2022 (2022-07-13) * paragraphs [0026], [0029], [0008]; figures * | 1-15 | |
| A | US 2022/127007 A1 (STRIBRNY CASEY A [US] ET AL) 28 April 2022 (2022-04-28) * paragraphs [0031], [0042] * | 1-15 | |
| A | EP 3 822 168 B1 (AMI IND INC [US]) 21 September 2022 (2022-09-21) * paragraphs [0036], [0087] - [0088] * | 1-15 | TECHNICAL FIELDS SEARCHED (IPC) B64D |

The present search report has been drawn up for all claims

| Place of search | Date of completion of the search | Examiner |
|---|---|---|
| Munich | 21 June 2024 | Douhet, Hervé |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 4613

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2024

| Patent document cited in search report | | Publication date | Patent family member(s) | | Publication date |
|---|---|---|---|---|---|
| US 6241197 | B1 | 05-06-2001 | NONE | | |
| US 11453506 | B2 | 27-09-2022 | NONE | | |
| GB 2602698 | A | 13-07-2022 | GB 2602698 A | | 13-07-2022 |
| | | | US 2022097857 A1 | | 31-03-2022 |
| US 2022127007 | A1 | 28-04-2022 | EP 3988453 A1 | | 27-04-2022 |
| | | | US 2022127007 A1 | | 28-04-2022 |
| EP 3822168 | B1 | 21-09-2022 | EP 3822168 A1 | | 19-05-2021 |
| | | | US 2021147089 A1 | | 20-05-2021 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 18654023